# EUROPÄISCHE PATENTANMELDUNG

(11) **EP 0 752 773 A1**
(43) Veröffentlichungstag der Anmeldung: **08.01.1997**
(21) Anmeldenummer: 96110915.4
(22) Anmeldetag: 05.07.1996
(51) Int. Cl.: H04L 12/28, H04L 12/46, H04Q 11/04

(54) **Verfahren zum Übermitteln von Informationspaketen zwischen Emulierten LANs**

(30) Priorität: 05.07.1995 DE 19524504; 28.09.1995 DE 19536270
(71) Anmelder: SIEMENS AKTIENGESELLSCHAFT, 80333 München (DE)
(72) Erfinder: Karapetkov, Stefan, 81369 München (DE); Petri, Bernhard, 81379 München (DE); Fromm, Ingrid, Dipl.Phys., 81477 München (DE)

(57) **Zusammenfassung**

Ein erstes und ein zweites ELAN sind jeweils über einen speziellen LEC an ein CLS-Netz wie z.B. SMDS oder CBDS angeschlossen. Informationspakete, deren Ziel-MAC-Adresse einem LEC eines zweiten ELAN zugeordnet ist, werden an den speziellen LEC mit Zugang zum CLS-Netz übertragen. Dort werden die einzelnen Informationspakete an eine Umsetzungsfunktion mit einem Adress-Speicher für einander zugeordnete MAC-Adressen des ELAN und E.164-Adressen des CLS-Weitverkehrsnetzes und mit einem Speicher für eine dem Übergang vom CLS-Weitverkehrsnetz zu dieser Umsetzungsfunktion zugeordneten E.164-Adresse übergeben. Dann werden die Informationspakete gemeinsam mit der der Ziel-MAC-Adresse zugehörigen E.164-Adresse an das CLS-Netz übergeben und in ein Rahmenformat des CLS-Netzes eingekapselt. Die eingekapselten Informationspakete werden über das CLS-Netz zum zweiten ELAN übermittelt. Nach einem Entkapseln der eingekapselten Informationspakete werden diese an den speziellen LEC des zweiten ELAN durch eine Umsetzungsfunktion übergeben und an den Ziel-LEC übermittelt.

## Beschreibung

Die Erfindung betrifft ein Verfahren zum Übermitteln von Informationspaketen zwischen einem Ursprungs-LAN-Emulation-Client LEC eines ersten ELAN und einem LAN-Emulation-Client eines zweiten ELAN.

ELAN steht für emuliertes LAN, wie es insbesondere beschrieben ist in der Spezifikation 94-0035R9, "LAN Emulation Over ATM: Version 1.0" der LAN Emulation SWG Drafting Group des ATM Forum vom 6. Januar 1995, Editor: Bill Ellington. Hierbei handelt es sich um einen Ansatz des ATM-Forums zurMigration von heutigen LANs zu ATM-Netzen. ATM bedeutet hierbei "Asynchronus Transfer Mode", also asynchrones Daten- bzw. Informationsübertragungsverfahren. LAN ist eine Abkürzung von "Local Area Network". Bei LANs handelt es sich um datagrammorientierte Lokalnetze, die u.a. in dem Artikel von David D. Clark, Kenneth D. Progran und David P. Reed, "An Introduction to Local Area Networks" in Proceedings of the IEEE, Vol. 66, No. 11, November 1978 auf den Seiten 1497 bis 1517 beschrieben sind. Außerdem sind LANs in ISO/IEC TR 8802-1, "Overview of LAN-Standards beschrieben. LANs bieten einen verbindungslosen Dienst, den sogenannten MAC-Service, an. MAC steht hierbei für "Media Access Control". Im Gegensatz zu diesem verbindungslosen Dienst ist die ATM-Technologie verbindungsorientiert. Sollen die für LANs entwickelten Protokolle der höheren Schichten in auf der Basis eines ATM-Netzes emulierten LANs benutzt werden, müssen in diesem ATM-Netz die Eigenschaften des verbindungslosen MAC-Dienstes erbracht werden. Die LAN-Emulation gemäß der obengenannten Spezifikation realisiert den MAC-Dienst im lokalen ATM-Netz und definiert damit ein einzelnes emuliertes LAN, im folgenden ELAN genannt. In diesem ELAN können die üblichen LAN-Protokolle wie LLC, TCP/IP, SPX/IPX oder TP/CLNP benutzt werden.

Die LAN-Emulation unterstützt die beiden am häufigsten verwendeten LAN-Standards, nämlich Ethernet gemäß IEEE 802.3 und Token-Ring gemäß IEEE 802.5, wobei bei Token-Ring drei Rahmenlängen unterstützt werden. Die Adressierung jeder LAN-Station erfolgt anhand einer weltweit eindeutigen Ziel-MAC-Adresse. Zur Übertragung von Informationen zwischen LANs werden von einer höheren Schicht übergebenen. Token-Ring-LANs verwenden zur Beschreibung des Informationsweges zusätzlich zu MAC-Adressen sogenannte Route Descriptors im Rahmenkopf. Anhand eines solchen Descriptors kann der Rahmen innerhalb von Token-Ring-LANs zum Ziel befördert werden.

Im folgenden wird nur von MAC-Adressen gesprochen.

Zur Emulation eines LAN in einem ATM-Netz muß die LAN-Emulation u.a. Ziel-MAC-Adressen in Ziel-ATM-Adressen auflösen, Multicast und Broadcast realisieren, also eine Verteilung von Information an mehrere oder an alle Teilnehmer, sowie die Übertragung von LAN-Emulation-Rahmen in der richtigen Reihenfolge sicherstellen. Die LAN-Emulation hat eine Client-Server-Konfiguration. Die Clienten-Seite wird LAN-Emulation-Client LEC genannt und die Server-Seite wird LAN-Emulation-Service genannt. Der LAN-Emulation-Service besteht aus LAN-Emulation-Server LES, Broadcast-and-Unknown-Server BUS und LAN-Emulation-Configration-Server LECS. Der LAN-Emulation-Client bekommt von einer übergeordneten Schicht, beispielsweise der LLC-Schicht, die Ziel-MAC-Adresse und muß die entsprechende ATM-Adresse finden, um daraufhin den Aufbau einer direkte ATM-Verbindung zum Ziel durch Signalisierung zu veranlassen. Die Signalisierung kann hierbei beispielsweise nach der ITU-T-Empfehlung Q.2931/Q.2971 erfolgen. Ein LAN-Emulation-Client kann in der Software oder in der Hardware der Stationen realisiert sein, die an der LAN-Emulation teilnehmen.

Ein LAN-Emulation-Server LES unterhält eine Tabelle mit allen MAC-Adressen, die im emulierten LAN beispielsweise im Rahmen einer Konfigurierung angemeldet sind, und mit den entsprechenden ATM-Adressen. Zwischen den LAN-Emulation-Clienten und dem LAN-Emulation-Server erfolgt die Kommunikation nach einem LAN-Emulation-Adressenauflösungsprotokoll, das entsprechend der englischen Bezeichnung LAN Emulation Address Resolution Protocoll mit LE_ARP bezeichnet wird. Kennt ein LAN-Emulation-Client die Ziel-ATM-Adresse einer Ziel-MAC-Adresse nicht, so sendet er eine Anfrage mit der Ziel-MAC-Adresse an den LAN-Emulation-Server. Eine solche Anfrage zur Adreßauflösung wird mit LE_ARP Request bezeichnet. Falls der LES die Ziel-ATM-Adresse auflösen kann, antwortet er mit LE_ARP Response. Wenn nicht, schickt er die Anfrage an weitere LAN-Emulation-Clienten.

Erhält ein LAN-Emulation-Client eine Adreßauflösungsantwort LE_ARP Response, so baut er zu der hierin enthaltenen ATM-Adresse eine ATM-UBR-Verbindung auf und sendet einen Unicast-Rahmen. UBR bedeutet hierbei "Unspecified Bit Rate", gibt also an, daß die Bitrate nicht festgelegt ist. Ein Unicast-Rahmen ist ein Informations- bzw. Datenpaket mit einem einzigen Adressaten. Bei der Übertragung von Rahmen innerhalb eines ELAN wird zwischen Unicast-Rahmen an einen Empfänger und Multicast- oder Broadcast-Rahmen an mehrere oder alle Empfänger unterschieden. Eine ATM-UBR-Verbindung bleibt ab dem letzten gesendeten Rahmen für 20 Minuten bestehen, damit weitere Rahmen auf einfache Weise zum selben Empfänger geschickt werden können. Hierzu wird auf die Variable C12 in Punkt 5.1.1 der LAN-Emulation-Spezifikation verwiesen. Im LAN-Emulation-Client werden mit Hilfe eines Cash-Mechanismus die Ziel-ATM-Adressen von Ziel-MAC-Adressen eine bestimmte Zeit lang gespeichert. Falls keine Verbindung zu einem Ziel-LAN-Emulation-Client besteht, die Ziel-ATM-Adresse jedoch im Sender-LAN-Emulation-Client bekannt ist, kann ein Sender-LAN-Emulation-Client LEC eine Verbindung ohne Adreßauflösungsanfrage aufbauen und einen Unicast-Rahmen senden.

Multicast-Rahmen an eine Gruppe von Teilnehmern bzw. LAN-Emulation-Clienten und Broadcast-Rahmen an alle Teilnehmer bzw. LAN-Emulation-Client LECen werden an den obengenannten BUS geschickt. Innerhalb eines ELAN unterhält der BUS Verbindungen zu allen LEC die angekommenen Rahmen an die Adressaten.

Jeder LAN-Emulation-Client kann bei der Konfigurierung als sogenannter Proxy-LEC angemeldet werden. Ein Proxy-LAN-Emulation-Client erhält alle Adreßauflösungsanfragen LE_ARP Request, die ein LES nicht auflösen kann. Außerdem erhält ein Proxy-LEC alle Multicast- und alle Broadcast-Rahmen.

Der Vorteil der ATM-Technologie ist u.a. darin zu sehen, daß direkte Verbindungen mit flexibler Bandbreite zwischen den Kommunikationspartnern aufgebaut werden können. Solche direkte Verbindungen garantieren minimale Zeitverzögerungen und eine hohe Informationsübertragungsrate. Dieser Vorteil der ATM-Technologie wird in der LAN-Emulation für Unicast-Rahmen genutzt. In dem Artikel "Interconnect Emulated LANs with White Area ATM Networks" von Peter T.P. Chang und Bill Ellington, ATM Forum Technical Committee vom 29. November - 2. Dezember 1994 sind verschiedene Konzepte bekannt, lokale ATM-Netze, wie z.B. ELANs über ein Weitverkehrs-ATM-Netz zu verbinden. In einem ersten Konzept sind hierbei mehrere ELANs an ein Weitverkehrs-ATM-Netz angeschlossen, wobei die Adreßauflösung und die Datenübertragung über einen einzigen LAN-Emulation-Server und einen einzigen BUS vorgenommen werden. Dieses Konzept führt zu einem enormen Verkehrsaufkommen zur Realisierung der Broadcast-Funktion. Die Adreßauflösungsverzögerungszeiten in einem solchen Netz sind extrem hoch.

Ein weiteres Konzept sieht vor, ELANs jeweils über Fernbrücken (Remote Bridges) an ein Weitverkehrs-ATM-Netz anzuschließen. Hierbei sind entweder alle Fernbrücken über permanente virtuelle Leitungen PVC (Permanent Virtual Circuit) miteinander verbunden oder die Fernbrücken sind unter Verwendung eines Adreßauflösungs-Servers mit Hilfe einer ATM-Signalisierung dynamisch miteinander verbunden. Hierbei sind die Übertragungsmöglichkeiten durch die Übertragungsmöglichkeiten der Fernsteuerbrücken und die Bandbreite der permanenten virtuellen Leitungen zwischen zwei Fernsteuerbrücken beschränkt. Die Fernbrücken werden mit Broadcast-Rahmen von Broadcast and Unknown Servern ferner ELANs überflutet, sofern deren Fernbrücke jeweils nicht die Adresse der den Ziel-MAC-Adressen zugeordneten Fernbrücken kennt.

Ein weiteres Konzept sieht vor, anstelle der Fernbrücken Brouter vorzusehen, eine Mischung aus Brücke und Rrouter. Diese Brouter erfüllen in diesem Fall auf der ELAN-Seite die Funktion einer LAN-Emulations-Brücke und auf der Seite des ATM-Weitverkehrsnetzes die Funktionen eines Routers. Dadurch werden die Broadcast-Probleme reduziert, eine Beschränkung der Übertragungsmöglichkeiten über das ATM-Weitbereichsnetz durch die Übertragungsmöglichkeiten der Brouter und der permanenten virtuellen Leitungen bleibt jedoch bestehen.

Ein weiteres Konzept sieht vor, die LAN-Emulation-Server der einzelnen ELANs sowie die BUS der einzelnen ELANs miteinander durch Direktverbindungen zu verbinden. Dies führt jedoch zu einer großen Anzahl von Direktverbindungen und zu einem hohen Verkehrsaufkommen zwischen den LAN-Emulation-Servern und den BUS der einzelnen ELANs. Das Verkehrsaufkommen steigt hierbei linear mit der Anzahl der verbundenen ELANs. Ein weiteres Konzept sieht vor, die LAN-Emulation-Server der einzelnen ELANs sowie die BUS der einzelnen ELANs über Direktverbindungen an einen übergeordneten LAN-Emulation-Server bzw. einen übergeordneten BUS zu verbinden. Dies führt jedoch ebenfalls zu einer großen Anzahl von Direktverbindungen und zu einem hohen Verkehrsaufkommen. Die Mehrschichtigkeit von BUS und übergeordnetem BUS bzw. LES und übergeordnetem LES führt außerdem zu Zeitverzögerungen.

Aufgabe der Erfindung ist das Bereitstellen eines Verfahrens zum Übermitteln von Informationspaketen zwischen einem Ursprungs-LAN-Emulation-Client LEC eines ersten ELAN und einem Ziel-LAN-Emulation-Client LEC eines zweiten ELAN, falls die ATM-Adresse des Ziel-LAN-Emulation-Client innerhalb des ersten ELAN nicht bekannt ist.

Diese Aufgabe wird gelöst durch ein Verfahren mit den Merkmalen des Anspruchs.

Wenn innerhalb eines ELAN Information von einem LAN-Emulation-Client LEC zu einem anderen LAN-Emulation-Client LEC übertragen werden soll, veranlaßt der Ursprungs-LAN-Emulation-Client LEC üblicherweise einen ATM-Verbindungsaufbau zu dem Ziel-LAN-Emulation-Client LEC. Hierzu ist die Ziel-ATM-Adresse erforderlich. Der Ursprungs-LAN-Emulation-Client LEC kennt von höheren Schichten eine Ziel-MAC-Adresse. Außerdem kann in seinem Speicher zu der Ziel-MAC-Adresse eine Ziel-ATM-Adresse abgelegt sein. Falls keine Ziel-ATM-Adresse abgelegt ist, gibt der Ursprungs-LAN-Emulation-Client LEC normgemäß an einen LAN-Emulation-Server LES des ELAN eine Adreßauflösungsanfrage LE_ARP_Request. Wenn der der Ziel-MAC-Adresse zugeordnete Client nicht zu dem ELAN dieses LAN-Emulation-Server gehört, kann dieser LAN-Emulation-Server die ATM-Adresse nicht auflösen, die Adreßauflösungsanfrage also nicht beantworten.

Erfindungsgemäß sind das erste und das zweite ELAN an ein einen verbindungslosen Dienst wie z.B. SMDS (Switched Multimegabit Data Service) oder CBDS (Connectionless Broadband Data Service) bereitstellendes Weitverkehrsnetz (regional und/oder global) angeschlossen. Der Einfachheit halber wird im folgenden und in den Patentansprüchen, sofern keine anderslautenden Erläuterungen vorgenommen werden unter Weitverkehrsnetz immer ein einen verbindungslosen Dienst bereitstellendes Weitverkehrsnetz - also ein CLS-Weitverkehrsnetz (regional und/oder global) - gemeint.

Ist die aufzulösende Ziel-MAC-Adresse mindestens einem LAN-Emulation-Client LEC eines zweiten ELAN zugeordnet, so werden erfindungsgemäß die Informationspakete an einen speziellen LAN-Emulation-Client LEC mit Zugang zu einem einen verbindungslosen Dienst bereitstellenden Weitverkehrsnetz übertragen. Dort werden die einzelnen Informationspakete an eine Umsetzungsfunktion (IWF = Inter Working Function) mit einem Adress-Speicher für einander zugeordnete MAC-Adressen des ELAN und E.164-Adressen des CLS-Weitverkehrsnetzes und mit einem Speicher für eine dem Übergang vom CLS-Weitverkehrsnetz zu dieser Umsetzungsfunktion zugeordneten E.164-Adresse übergeben. Dann werden die Informationspakete gemeinsam mit der der Ziel-MAC-Adresse zugehörigen E.164-Adresse an das CLS-Weitverkehrsnetz übergeben und in ein Rahmenformat des CLS-Weitverkehrsnetzes eingekapselt. Die eingekapselten Informationspakete werden über das einen verbindungslosen Dienst bereitstellende CLS-Weitverkehrsnetz zum ELAN des Ziel-LAN-Emulation-Client LEC übermittelt. Nach einem Entkapseln der eingekapselten Informationspakete werden diese entkapselten Informationspakete an einen speziellen LAN-Emulation-Client LEC des zweiten ELAN mit Zugang zum einen verbindungslosen Dienst bereitstellenden Weitverkehrsnetz durch eine Umsetzungsfunktion übergeben und an den Ziel-LAN-Emulation-Client LEC übermittelt.

Ist der Ziel-MAC-Adresse ein einziger Ziel-LAN-Emulation-Client LEC zugeordnet, also die Übertragung von Unicast-Rahmen beabsichtigt, so wird gemäß der oben erwähnten 'LAN-Emulation over ATM-Specification' vom Ursprungs-LAN-Emulation-Client LEC eine Adreßauflösungsanfrage an den LAN-Emulation-Server des lokalen ELAN gesendet. Da der LAN-Emulation-Server nur die lokalen ATM-Adressen kennt, kann er die Ziel-ATM-Adresse nicht auflösen. Der lokale LAN-Emulation-Server gibt daher die Adreßauflösungsanfrage des Ursprungs-LAN-Emulation-Client LEC an alle im lokalen ELAN angemeldeten Proxy-LAN-Emulation-Client LEC ab. Daher sind die einzelnen ELANs jeweils über einen speziellen LAN-Emulation-Client an das einen verbindungslosen Dienst bereitstellende Weitverkehrsnetz angeschlossen. Dieser Zugangs-LAN-Emulation-Client ist jeweils vorzugsweise als Proxy-LAN-Emulation-Client LEC in seinem ELAN angemeldet.

Sind die einzelnen ELANs jeweils über einen Zugangs-LAN-Emulation-Client an das einen verbindungslosen Dienst bereitstellende Netz angeschlossen, so wird der Übergang zwischen einem ELAN und dem einen verbindungslosen Dienst bereitstellenden Weitverkehrsnetz vorzugsweise durch eine Übergangsfunktion IWF (Inter Working Function, auch Umsetzungsfunktion genannt) gebildet, die zwischen dem CLS-Weitverkehrsnetz (T-Referenzpunkt) und einem Zugangs-LEC des jeweiligen ELAN angeordnet ist. Eine solche Übergangsfunktion kann eine Brücke (Bridge) oder ein Router sein.

Eine Brücke als Übergangsfunktion hat beispielsweise einen Adress-Speicher für einander zugeordnete MAC-Adressen des ELAN und E.164-Adressen des CLS-Weitverkehrsnetzes und einen Speicher für eine dem Übergang vom CLS-Weitverkehrsnetz zur Brücke zugeordnete E.164-Adresse.

Eine einfache Ausführungsform einer solchen Brücke kann vorsehen, daß Adreßauflösungsanfrage-Rahmen und Unicast- sowie Multicast-Daten-Rahmen verworfen werden, falls zu ihrer Ziel-MAC-Adresse im Adress-Speicher keine zugeordnete E.164-Adresse gespeichert ist, daß Unicast- sowie Multicast-Daten-Rahmen an das CLS-Weitverkehrsnetz weitergeleitet werden, falls zu ihrer Ziel-MAC-Adresse im Adreß-Speicher eine zugeordnete E.164-Adresse gespeichert ist, und daß Datenrahmen, deren Ziel-MAC-Adresse eine lokale Broadcast-MAC-Adresse ist, verworfen werden. Die Umsetzungsfunktion übergibt jeweils gemeinsam mit dem Rahmen die der Ziel-MAC-Adresse zugehörige E.164-Adresse an die Schnittstelle zum CLS-Weitverkehrsnetz. Vorzugsweise übergibt die Umsetzungsfunktion auch die der Ursprungs-MAC-Adresse zugeordnete E.164-Adresse.

Vom CLS-Weitverkehrsnetz kommende Rahmen werden an die Schnittstelle (LEC) zum ELAN übergeben.

Eine sehr einfache Ausführungsform einer solchen Brücke kann vorsehen, daß Adreßauflösungsanfrage-Rahmen immer verworfen werden und daß nur Datenrahmen an die Schnittstelle zum CLS-Weitverkehrsnetz übergeben werden.

Eine Umsetzungsfunktion gemäß den erwähnten Ausführungsformen sieht vor, daß nur Rahmen für solche MAC-Adressen übertragen werden können, die gemeinsam mit der zugeordneten E.164-Adresse im Adresspeicher abgelegt sind. Dadurch gelangen nur Rahmen in das einen verbindungslosen Dienst bereitstellende Weitverkehrsnetz, die mit zumutbarem Aufwand adressierbar sind.

Sollten auch Rahmen für solche MAC-Adressen übertragen werden können, deren zugeordnete E.164-Adressen nicht im Adreßspeicher abgelegt sind, so kann die genannte Umsetzungsfunktion ausgestaltet sein, um Rahmen, zu deren Ziel-MAC-Adresse im Adress-Speicher keine zugeordnete E.164-Adresse gespeichert ist, mit einer allen ELANs zugeordneten E.164-Adresse (globale E.164-Gruppenadresse) an das CLS-Weitverkehrsnetz weiterzuleiten. Solche Rahmen werden dann, beispielsweise vom Gruppenadressen-Agenten des CLS-Weitverkehrsnetzes gesteuert, an alle ELANs geschickt. Durch diese Maßnahme kann jedoch das CLS-Weitverkehrsnetz relativ hoch belastet werden.

Vorzugsweise ist bei beschriebenen Umsetzungsfunktionen vorgesehen, jeweils die dem Sender vom CLS-Weitverkehrsnetz kommender Rahmen zugeordnete MAC-Adresse sowie die dieser zugeordnete E.164-Adresse im Adreß-Speicher zu speichern. Dadurch wird das gezielte Übertragen von Daten - beispielsweise einer Antwort - vom Empfänger einer Information zum Sender dieser Information über das einen verbindungslosen Dienst bereitstellende Weitverkehrsnetz erleichtert.

Ein erstes Realisierungsbeispiel für die Einbindung einer vorstehend beschriebene Umsetzungsfunktion zwischen ein ELAN und ein einen verbindungslosen Dienst bereitstellendes Weitverkehrsnetz für den Fall, daß der verbindungslose Dienst ein "Switched Multi-megabit Data Service" SMDS ist, und daß das Weitverkehrsnetz zur Realisierung dieses Dienstes ein "Distributed Queue Dual Bus" DQDB ist, kann vorsehen, daß weitverkehrsnetzseitig die Protokollschichten SMDS-Schnittstellenprotokollschicht 1 SIP_1, SMDS-Schnittstellenprotokollschicht 2 SIP_2 und SMDS-Schnittstellenprotokollschicht 3 SIP_3 vorgesehen sind und daß die Umsetzungsfunktion weitverkehrsnetzseitig mit der SMDS-Schnittstellenprotokollschicht 3 SIP_3 kommuniziert.

Hierbei können beispielsweise ELAN-seitig die Protokollschichten Physikalische Schicht PHY, Asynchron-Transfer-Modus-Schicht ATM, Asynchron-Transfer-Modus-Anpassungsschicht-5 AAL5 und LAN-Emulation-Client-Schicht LEC vorgesehen sein, wobei die Umsetzungsfunktion ELAN-seitig mit der LAN-Emulation-Client-Schicht (LEC) kommuniziert.

In einem anderen Beispiel kann der verbindungslose Dienst ein "Switched Multi-megabit Data Service" (SMDS) sein und das Weitverkehrsnetz zur Realisierung dieses Dienstes ein ATM-Netz, wobei weitverkehrsnetzseitig die Protolollschichten Physikalische Schicht PHY, Asynchrone-Transfer-Modus-Schicht ATM, Segmentations-und-Assemblierungs-Subschicht der Asynchron-Transfer-Modus-Anpassungsschicht-3/4 AAL3/4SAR und SMDS-Schnittstellenprotokollschicht 3 SIP_3 vorgesehen sind und wobei die Umsetzungsfunktion weitverkehrsnetzseitig mit der SMDS-Schnittstellenprotokollschicht 3 (SIP_3) kommuniziert.

In einem weiteren Beispiel kann der verbindungslose Dienst ein "Connectionless Broadband Data Service" CBDS sein und das Weitverkehrsnetz zur Realisierung dieses Dienstes ein ATM-Netz, wobei weitverkehrsnetzseitig die Protokollschichten Physikalische Schicht PHY, Asynchron-Transfer-Modus-Schicht ATM, Asynchron-Transfer-Modus-Anpassungsschicht-3/4 AAL3/4 und Verbindungsloses-Netz-Zugriffs-Protokollschicht CLNAP vorgesehen sind und wobei die Umsetzungsfunktion weitverkehrsnetzseitig mit der Verbindungsloses-Netz-Zugriffs-Protokollschicht CLNAP kommuniziert.

Figur 1 zeigt die erfindungsgemäße Übertragung von Unicast-Daten-Rahmen durch das CLS-Netz.

Figuren 2A bis 2C zeigen jeweils einen Protokollstack bei Kopplung von ELANs durch SMDS-Netz bzw CBDS-Netz.

Der Connectionless Service oder CLS-Dienst kann mit verschiedenen Technologien (z.B. DQDB, ATM, FR) realisiert werden. Der Dienst wird in der ITU-T Empfehlung F.812 beschrieben.

Bekannte Realisierungen sind der Switched Multi-megabit Data Service (SMDS), beschrieben in Spezifikationen von Bellcore, SMDS Interest Group (SIG) und European SMDS Interest Group (ESIG), sowie der Connectionless Broadband Data Service (CBDS), definiert in ETSI Standard 300 217 und ITU-T Empfehlung I.364. Durch diese Realisierungen fand der CLS weltweit große Verbreitung. Anlagen, die diesen Dienst anbieten, werden von vielen Herstellern im Bereich der Telekommunikation gebaut.

Der Dienst ist für weltweite Datenkommunikation gedacht. Dabei werden jedem Zugang zum CLS-Netz eine oder mehrere CLNAP-Adressen nach E.164 ( E.164-Adresse) zugeteilt (CLNAP=Connectionless Network Access Protocol).

Einem ankommenden Unicast-Rahmen wird anhand seiner Ziel-MAC-Adresse durch statische oder dynamische Zuordnungstabellen eine Ziel-CLNAP-Adresse ( E.164-Adresse) zugefügt (Einkapseln) und der eingekapselte Rahmen (auch CLS-Paket genannt) wird zu dieser CLNAP-Adresse geleitet.

Zum besseren Verständnis werden im folgenden die Adressen im ELAN Unicast- bzw. Multicast/Broadcast-MAC-Adressen genannt, im CLS-Netz wird dagegen von individuellen und Gruppenadressen gesprochen.

Jedes CLS-Paket wird im CLS-Netz unabhängig von den anderen übertragen. Das Netz sorgt für die richtige Reihenfolge der CLS-Pakete.

Innerhalb des CLS-Netzes werden unter bestimmten Voraussetzungen (siehe prETS 300 478, 300 479) die CLNAP-PDUs in CLNIP-PDUs (CLNIP = Connectionless Network Interface Protocol) eingekapselt.

Die Behandlung von Multicast-Verkehr wird im CLS-Netz in folgender Weise realisiert. Sogenannte Group Address Agents (GAAs) enthalten Tabellen mit den individuellen CLNAP-Adressen, die zu einer CLNAP-Gruppenadresse gehören. Jedes CLS-Paket, das eine Gruppenadresse als Zieladresse hat, wird zum entsprechenden Group Address Agent geleitet. Falls eingekapselt wurde, steht in den Feldern "CLNAP Destination Address" und "CLNIP Destination Address" die gleiche Gruppenadresse.

Der GAA löst die Gruppenadresse des angekommenen CLS-Pakets in individuelle CLNIP-Adressen auf, erzeugt Kopien des ursprünglichen Pakets und fügt jeder Kopie die entsprechende individuelle Adresse als CLNIP-Adresse hinzu.

Das "CLNAP Destination Address" Feld bleibt unverändert, damit der Empfänger die ursprüngliche Gruppenadresse erfahren kann. Die LAN-Emulation beschreibt ein einzelnes emuliertes LAN. Für die Kopplung von ELANs sind zur Zeit keine Lösungen bekannt. Aus Leistungsgründen können die in der LAN-Emulation beschriebenen Mechanismen zur Adressenauflösung und zur Realisierung von Multicast/Broadcast im WAN Bereich nicht einfach übernommen werden.

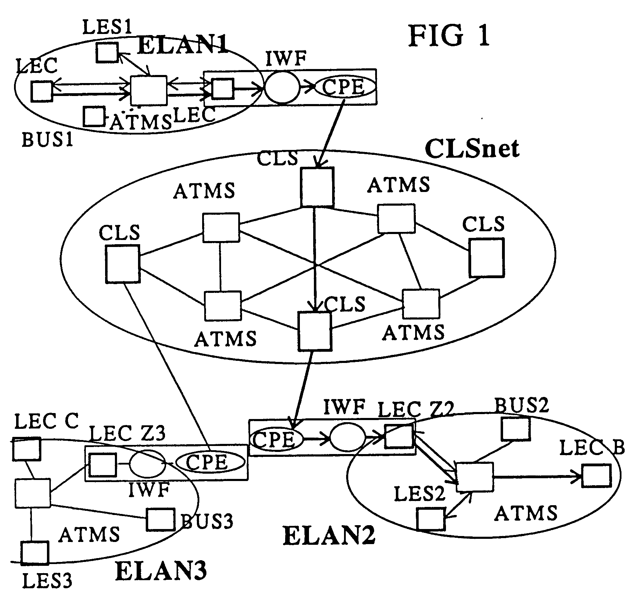

Ein Ausführungsbeispiel zur Übertragung von ELAN-Rahmen durch das CLS-Netz wird nachstehend unter Bezugnahme auf Figur 1 näher erläutert.

Die Figur 1 zeigt drei ELANs ELAN1, ELAN2 und ELAN3, jeweils mit einem LAN-Emulation-Server LES, einer ATM-Vermittlungseinrichtung ATMS, einem LAN-Emulation-Client LEC A, LEC B, LEC und einem speziellen LAN-Emulation-Client LEC Z1, LEC Z2, LEC Z3, der nachstehend als Zugangs-LEC bezeichnet wird und der dem jeweiligen ELAN ELAN1, ELAN2 bzw. ELAN3 über eine Kundenanschlußeinheit CPE (Customer Premises Equipment) Zugang zu einem ebenfalls dargestellten, einen verbindungslosen Dienst bereitstellenden Netz CLSnet ermöglicht. Hierbei ist jeder Kundenanschlußeinheit CPE eine nicht speziell dargestellte Übergangsfunktion (Interworking Function IWF) zugeordnet zum Umsetzungsen einer Ziel-MAC-Adresse in eine E.164-Adresse der Kundenanschlußeinrichtung CPE des ELAN, in dem der LAN-Emulation-Client sich befindet, dem die Ziel-MAC-Adresse zugeordnet ist, oder in eine E.164-Gruppenadresse aller ELANs. In dem Ausführungsbeispiel gemäß der Figur 1 ist das einen verbindungslosen Dienst bereitstellende Netz CLSnet mit Hilfe eines (regionalen oder globalen) ATM-Netzes mit ATM-Vermittlungseinrichtungen ATMS realisiert. Die Realisierungsart des einen verbindungslosen Dienst bereitstellenden Netzes CLSnet hat jedoch keinen Einfluß auf die Erfindung.

In der Figur 1 sind außerdem jeweils der Broadcast-and-Unknown-Server BUS1, BUS2, BUS3 des ELAN1, ELAN2 und ELAN3 dargestellt. Wie durch einen übergreifenden Rahmen dargestellt, bilden in dem dargestellten Beispiel jeweils Zugangs-LEC, Umsetzungsfunktion IWF und Kundenanschlußeinrichtung CPE eine Brücke, deren Brückenfunktion die Umsetzungsfunktion IWF ist.

Das einen verbindungslosen Dienst bereitstellende Netz CLSnet enthält einen verbindungslosen Dienst bereitstellende Server (Connectionless Server) CLS und üblicherweise einen Gruppenadreßagenten (Group Address Agent GAA, nicht dargestellt).

In Fig. 1 ist der Signalfluß von Daten vom LAN-Emulation-Client LEC A zum LAN-Emulation-Client LEC B durch eine fette Linie mit Pfeil in Signalflußrichtung angedeutet.

Eine einfache Kopplung von ELANs über das CLS-Netz (einen verbindungslosen Dienst bereitstellendes Netz) kann also realisiert werden, wenn alle Daten-Rahmen, die an LAN-Emulation-Clients außerhalb des ELANs geliefert werden sollen, über das CLS-Netz transportiert werden. Dafür ist ein LAN-Emulation-Client LEC in jedem ELAN erforderlich, der über eine Interworking Function Zugang zum CLS-Netz hat (siehe LAN-Emulation-Clienten LEC Z1, LEC Z2, LEC Z3 in Figur 1). Zusätzlich kann hierbei vorgesehen sein, auch Adreßauflösungsanfrage-Rahmen an LAN-Emulation-Server anderer ELANs über das CLS-Netz zu Übertragen sowie Adreßauflösungsantwort-Rahmen.

Wenn beispielsweise LAN-Emulation-Client LEC A einen Unicast-Rahmen mit unbekannter Ziel-ATM-Adresse an LAN-Emulation-Client LEC B senden will, schickt er einen LE_ARP Request an den lokalen LAN-Emulation-Server. Wenn dieser LAN-Emulation-Server keinen Eintrag für die Ziel-MAC-Adresse in seiner Tabelle hat, muß er den LE_ARP Request an alle Proxy LECs schicken. Falls der "Zugang-LEC" LEC Z1 sich als Proxy beim LAN-Emulation-Server angemeldet hat, erhält er alle LE_ARP Requests, die der LES nicht beantworten kann.

LEC Z1 schickt LE_ARP Response mit seiner (LEC Z1) ATM-Adresse an LEC A, falls die Interworking Function die Ziel-MAC-Adresse kennt oder (in einer anderen Ausführungsform) falls die Ziel-MAC-Adresse nicht in dem Verzeichnis der Fern-Unicast-Adressen (Remote Unicast MAC Adresses, Variable C27 der ELAN-Specification) des Zugangs-LEC LEC Z1 enthalten sind.

LAN-Emulation-Client LEC A baut daraufhin eine direkte ATM-Verbindung zum LAN-Emulation-Client LEC Z1 auf und schickt den Unicast-Rahmen. Der Zugang-LEC LEC Z1 übergibt den Rahmen an die Interworking Function (IWF), die weiter unten noch näher beschrieben wird. Die Umsetzungsfunktion IWF transformiert jeden angekommenen Unicast-Rahmen in das Format eines CLS-Pakets (CLNAP-Paket) und übergibt ihn an das CLS-Netz.

Das CLS-Netz transportiert das Paket zum Ziel-CPE, das den ursprünglichen Daten-Rahmen auspackt und über die Umsetzungsfunktion an den "Zugang LEC" (LEC Z2) weiterleitet. LAN-Emulation-Client LEC Z2 erfährt die ATM-Adresse des Empfängers vom lokalen LAN-Emulation-Server (LE_ARP), baut eine direkte ATM-Verbindung zu ihm auf und überträgt den Unicast-Daten-Rahmen.

Zur Realisierung des beschriebenen Beispiels sind in der LAN Emulation Specification keine Änderungen notwendig. Der "Zugang LEC" LEC Z1, LEC Z2, LEC Z3 muß sich als Proxy beim LAN-Emulation-Server anmelden, um alle unbeantworteten LE_ARP Requests vom LAN-Emulation-Server zu bekommen. Die Anmeldung erfolgt in der Join Phase durch Setzen des Proxy Bits im LE_JOIN_REQUEST, der vom LAN-Emulation-Client LEC an den LAN-Emulation-Server geschickt wird.

Auswirkungen auf das CLS-Netz (z.B. SMDS oder CBDS): In Standards und Spezifikationen sind keine Änderungen notwendig.

Nachstehend wird allgemein zur Umsetzungsfunktion (Interworking Function) IWF Stellung genommen:

Die Umsetzungsfunktion realisiert die Verbindung zwischen dem "Zugang LEC" einerseits und dem CLS-Netz andererseits.

Die Umsetzungsfunktion zur Kopplung von ELANs durch das CLS-Netz behandelt MAC- und E.164-Adressen und ist der Schicht 2 nach OSI-Referenzmodell zuzuordnen. Das heißt, die Umsetzungsfunktion ist eine ELAN-CLS Brücke.

Wenn die Umsetzungsfunktion auch Routing Funktionen erfüllen soll, kann sie auch Schicht 3 Adressen (z.B. IP, IPX u.s.w.) behandeln. Das ist aber für die Realisierung der beschriebenen Verfahren nicht erforderlich.

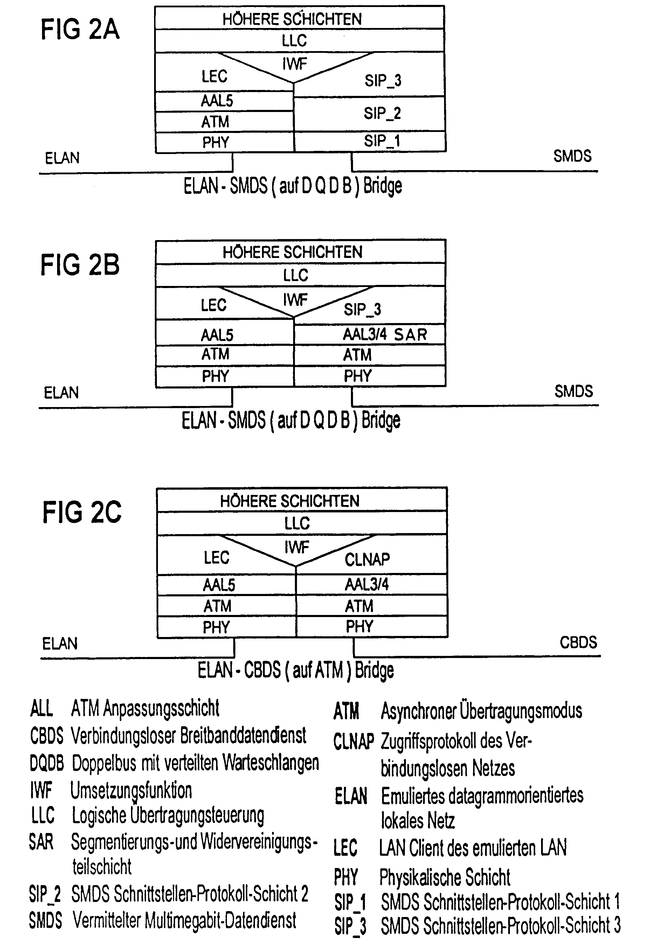

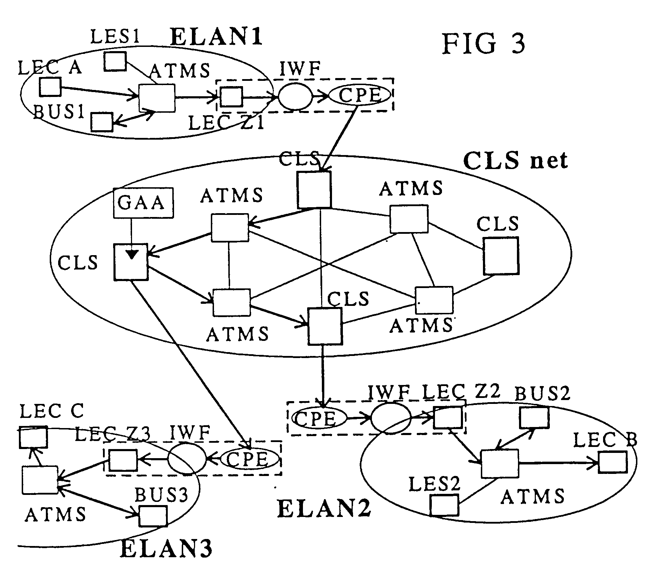

Im Beispiel in Figur 2A, 2B und 2C wird jeweils der Protokollstack für Kopplung von ELANs durch das SMDS-Netz bzw. durch das CBDS-Netz dargestellt. Der SMDS-Dienst wird in dem Beispiel nach Figur 2A mit der DQDB-Technologie und im Beispiel nach Figur 2B mit der ATM-Technologie realisiert. Der CBDS-Dienst wird in dem Beispiel nach Figur 2C mit der ATM-Technologie realisiert.

Die Umsetzungsfunktion hat die folgenden Aufgaben:
1. Bereitstellung der folgenden Parameter:
   1.1. Empfänger-E.164-Adresse
      Die Umsetzungsfunktion muß hierzu eine Tabelle mit MAC-Adressen und den entsprechenden E.164-Adressen unterhalten. Die Einträge in der Tabelle werden beispielsweise per Netzmanagement eingestellt, können aber auch anhand der Sender-MAC-Adresse und Sender-E.164-Adresse der angekommenen CLS-Pakete ausgefüllt werden und nach einer bestimmten Zeit gelöscht werden.
   1.2. Sender-E.164-Adresse
      Das ist die E.164-Adresse der Umsetzungsfunktion.
2. Behandlung der Rahmen entsprechend der Ziel-MAC-Adresse:
   2.1. Unicast/Multicast-Daten-Rahmen, für die ein Eintrag vorhanden ist, werden an das CLS-Netz geleitet.
   2.2. Unicast/Multicast-Daten-Rahmen für die kein Eintrag vorhanden ist, werden entweder verworfen, oder (in einer speziellen Ausgestaltung der IWF) mit einer globalen E.164-Gruppenadresse versehen und an das CLS-Netz geleitet.
   2.3. Rahmen mit lokaler Broadcast-MAC-Adresse werden weggeworfen.
   2.4. Rahmen mit globaler Broadcast-MAC-Adresse werden mit der globalen E.164-Gruppenadresse versehen und an das CLS-Netz geleitet.
3. Rahmen-Segmentierung (optional)
   LE_Token Ring 16 Mbit/s Rahmen können bis 18190 Oktetts lang sein. Andererseits kann ein CLS-Paket nur 9180 Oktetts transportieren. Längere Rahmen müssen deshalb ggf. segmentiert werden oder verworfen.

Nachstehend werden die Bedeutungen der verwendeten Abkürzungen in Form der Fachbegriffe gemäß den einschlägigen Normen angegeben:
- AAL: ATM Adaptation Layer
- ATM: Asynchronous Transfer Mode
- BUS: Broadcast and Unknown Server
- CBDS: Connectionless Broadband Data Service
- CLNAP: Connectionless Network Access Protocol
- CLNIP: Connectionless Network Interface Protocol
- CLNP: Connectionless Network Protocol
- CLS: Connectionless Service/Server
- CPE: Customer Premises Equipment
- CRC: Cyclic Redundancy Check
- DQDB: Distributed Queue Dual Bus
- DS1: Digital Signal 1
- DS3: Digital Signal 3
- E1: European transmission level 1
- E3: European transmission level 3
- ELAN: Emulated Local Area Network
- ESIG: European SMDS Interest Group
- ETSI: European Telecommunications Standards Institute
- FR: Frame Relay
- GAA: Group Address Agent
- IEEE: Institute of Electrical and Electronics Engineers
- IP: Internet Protocol
- IPX: Internetwork Packet Exchange
- ITU-T: International Telecommunications Union-Telecommunications
- IWF: Interworking Function
- L3_PDU: Level 3 Protocol Data Unit
- LAN: Local Area Network
- LE_ARP: LAN Emulation Address Resolution Protocol
- LEC: LAN Emulation Client
- LECS: LAN Emulation Configuration Server
- LES: LAN Emulation Server
- LLC: Logical Link Control
- MAC: Media Access Control
- OSI: Open Systems Interconnection
- PDU: Protocol Data Unit
- PHY: Physical Layer
- SIG: SMDS Interest Group
- SIP_3: SMDS Interface Protocol Layer 3
- SMDS: Switched Multi-megabit Data Service
- SPX: Sequenced Packet Exchange
- TCP: Transmission Control Protocol
- TP: Transport Protocol
- UBR: Unspecified Bit Rate
- WAN: Wide Area Network

## Patentansprüche

1. Verfahren zum Übermitteln von Informationspaketen zwischen einem Ursprungs-LAN-Emulation-Client eines ersten ELAN und einem Ziel-LAN-Emulation-Client eines zweiten ELAN, mit den folgenden Verfahrensschritten:
- Übertragung der Informationspakete an einen speziellen LAN-Emulation-Client mit Zugang zu einem einen verbindungslosen Dienst bereitstellenden Weitverkehrsnetz,
- Übergeben der einzelnen Informationspakete an eine Umsetzungsfunktion mit einem Adress-Speicher für einander zugeordnete MAC-Adressen des ELAN und E.164-Adressen des CLS-Weitverkehrsnetzes und mit einem Speicher für eine dem Übergang vom CLS-Weitverkehrsnetz zu dieser Umsetzungsfunktion zugeordneten E.164-Adresse,
- Übergeben der Informationspakete gemeinsam mit der der Ziel-MAC-Adresse zugehörigen E.164-Adresse an das CLS-Weitverkehrsnetz,
- Einkapseln der Informationspakete in ein Rahmenformat des CLS-Weitverkehrsnetzes,
- Übermitteln der Informationspakete über das einen verbindungslosen Dienst bereitstellende Weitverkehrsnetz zum ELAN des Ziel-LAN-Emulation-Client,
- Entkapseln der eingekapselten Informationspakete und Übergeben der entkapselten Informationspakete an einen speziellen LAN-Emulation-Client des zweiten ELAN mit Zugang zum einen verbindungslosen Dienst bereitstellenden Weitverkehrsnetz durch eine Umsetzungsfunktion, und
- Ubermittlung der Informationspakete an den Ziel-LAN-Emulation-Client.
